# EUROPEAN PATENT APPLICATION

(11) **EP 4 477 455 A1**
(43) Date of publication of application: **18.12.2024**
(21) Application number: 23826078.0
(22) Date of filing: 26.05.2023
(51) Int. Cl.: B60L 53/16, B60L 53/31, H02J 7/00

(54) **VEHICLE END CHARGING CONTROL GUIDANCE CIRCUIT, CIRCUIT BOARD, AND VEHICLE**

(30) Priority: 24.06.2022 CN 202210733373
(71) Applicant: ZHEJIANG ZEEKR INTELLIGENT TECHNOLOGY CO., LTD., 315000 Ningbo Zhejiang (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310000 (CN)
(72) Inventor: ZHANG, Jiaping, Ningbo, Zhejiang 315000 (CN); LI, Xin, Ningbo, Zhejiang 315000 (CN); WANG, Yuanyuan, Ningbo, Zhejiang 315000 (CN); NIU, Yaqi, Ningbo, Zhejiang 315000 (CN)
(74) Representative: Osterhoff, Utz
(86) International application number: PCT/CN2023/096661
(87) International publication number: WO 2023/246429

(57) **Abstract**

A vehicle-end charging control guidance circuit, a circuit board and a vehicle. The vehicle-end charging control guidance circuit includes a charging guidance module (01), and the charging guidance module (01) includes a switching unit (10), a differential charging guidance circuit (20) and a common charging guidance circuit (30). The switching unit (10) is configured to conduct the differential charging guidance circuit (20) corresponding to a charging interface standard of a power supply device in the charging guidance module (01) when receiving a switch control signal. The charging guidance module (01) is configured to transmit a charging signal between the power supply device and a microprocessor by a conducted differential charging guidance circuit (20) and the common charging guidance circuit (30). The requirements of different charging interface standards are met by the differential charging guidance circuit (20), thereby achieving compatibility with different charging interface standards.

## Description

This application claims priority to Chinese Patent Application No. 202210733373.4, filed on June 24, 2022. The disclosure of the above-mentioned application is incorporated herein by reference in its entirety.

### TECHNICAL FIELD

The present application relates to the technical field of electric vehicle, and in particular to a vehicle-end charging control guidance circuit, a circuit board and a vehicle.

### BACKGROUND

The charging standards for electric vehicles used in various countries or regions around the world may be different. When the vehicle that needs to be charged is sold in a corresponding region, the vehicle needs to meet the local charging interface standards, and the internal controller of the whole vehicle needs to match the corresponding charging guidance circuit aiming at different charging interface standards. At present, the corresponding charging guidance circuit is generally designed for different charging interface standards. The corresponding charging guidance circuit is adapted according to the sales area of the vehicle, which results in the charging guidance circuit being incompatible with other charging interface standards.

The above content is only used to assist in understanding the technical solution of the present application, and does not mean that the above content is recognized as prior art.

### SUMMARY

The main purpose of the present application is to propose a vehicle-end charging control guidance circuit, a circuit board and a vehicle, aiming to solve the technical problem that the existing vehicle-end charging guidance circuit is not compatible with multiple charging interface standards.

To achieve the above purpose, the present application proposes a vehicle-end charging control guidance circuit including a charging guidance module, and the charging guidance module includes a switching unit, a differential charging guidance circuit and a common charging guidance circuit;
the switching unit is configured to conduct the differential charging guidance circuit corresponding to a charging interface standard of a power supply device in the charging guidance module in response to receiving a switch control signal; and
the charging guidance module is configured to transmit a charging signal between the power supply device and a microprocessor by a conducted differential charging guidance circuit and the common charging guidance circuit.

In an embodiment, the common charging guidance circuit is configured to transmit a control pilot function signal between the power supply device and the microprocessor;
the differential charging guidance circuit includes: a first charging connection confirmation circuit, a fast charging connection confirmation circuit, a first auxiliary power supply circuit and a communication transceiver circuit; or
the differential charging guidance circuit includes: a first charging connection confirmation circuit and a power line carrier communication circuit; or
the differential charging guidance circuit includes: a second charging connection confirmation circuit and a power line carrier communication circuit; or
the differential charging guidance circuit includes: a second charging connection confirmation circuit, a fast charging connection confirmation circuit, a second auxiliary power supply circuit, a charging permission circuit and a communication transceiver circuit;
the first charging connection confirmation circuit is configured to transmit a first charging connection confirmation signal between the power supply device and the microprocessor;
the fast charging connection confirmation circuit is configured to transmit a fast charging connection confirmation signal between the power supply device and the microprocessor;
the first auxiliary power supply circuit is configured to provide a first auxiliary power supply for the microprocessor;
the charging permission circuit is configured to send a charging permission signal to the power supply device so that the power supply device starts charging in response to receiving the charging permission signal;
the second charging connection confirmation circuit is configured to transmit a second charging connection confirmation signal between the power supply device and the microprocessor;
the second auxiliary power supply circuit is configured to provide a second auxiliary power supply for the microprocessor;
the communication transceiver circuit is configured to transmit communication message between the power supply device and the microprocessor; and
the power line carrier communication circuit is configured to transmit a power line carrier signal between the power supply device and the microprocessor.

In an embodiment, the switching unit includes a first switching subunit and a second switching subunit, and the first switching subunit and the second switching subunit are respectively connected to charging guidance interfaces;
the first switching subunit is configured to conduct the differential charging guidance circuit and the first charging connection confirmation circuit in response to receiving a first switch control signal; and
the second switching subunit is configured to conduct the differential charging guidance circuit and the first auxiliary power supply circuit in response to receiving the first switch control signal.

In an embodiment, the switching unit includes a first switching subunit, and the first switching subunit is connected to a charging guidance interface; and
the first switching subunit is configured to conduct the differential charging guidance circuit and the first charging connection confirmation circuit in response to receiving a second switch control signal.

In an embodiment, the switching unit includes a first switching subunit, and the first switching subunit is connected to a charging guidance interface; and
the first switching subunit is configured to conduct the differential charging guidance circuit and the second charging connection confirmation circuit in response to receiving a third switch control signal.

In an embodiment, the switching unit includes a first switching subunit and a second switching subunit, and the first switching subunit and the second switching subunit are respectively connected to charging guidance interfaces;
the first switching subunit is configured to conduct the differential charging guidance circuit and the second charging connection confirmation circuit in response to receiving a fourth switch control signal; and
the second switching subunit is configured to conduct the differential charging guidance circuit and the second auxiliary power supply circuit in response to receiving the fourth switch control signal.

In an embodiment, the first switching subunit includes a first power supply, a first resistor, a second resistor and a first switch; and
a first end of the first resistor is connected to the first power supply, and a second end of the first resistor is connected to the charging guidance interface; the first switch is provided between a first end of the second resistor and a first end of the first resistor, and the second end of the second resistor is connected to the second end of the first resistor.

In an embodiment, the second switching subunit includes a second power supply, a third resistor, a fourth resistor and a gating switch chip; and
a first end of the third resistor is connected to the second power supply, and a second end of the third resistor is connected to a first end of the fourth resistor; a second end of the fourth resistor is connected to the microprocessor, and a first end of the gating switch chip is connected to the charging guidance interface; a second end of the gating switch chip is grounded, and a third end of the gating switch chip is connected to the second end of the third resistor.

In an embodiment, the common charging guidance circuit includes: a rectifier diode, a fifth resistor, a sixth resistor, a third switch, a voltage acquisition circuit and a pulse width modulation, PWM signal acquisition circuit; the fast charging connection confirmation circuit includes: a third power supply, a seventh resistor and an analog sampling filter circuit; the charging permission circuit includes an eighth resistor and a triode; the power line carrier communication circuit includes a first coupling capacitor, a second coupling capacitor, a communication transformer, a signal sending drive circuit, a signal receiving filter circuit, a power line communication, PLC chip power supply and a PLC chip; and
an anode of the rectifier diode is connected to a charging guidance interface, and a cathode of the rectifier diode is connected to a first end of the fifth resistor; a second end of the fifth resistor is grounded; a first end of the third switch is connected to the second end of the fifth resistor, and a second end of the third switch is connected to a first end of the sixth resistor; a second end of the sixth resistor is connected to an input end of the PWM signal acquisition circuit, and an output end of the PWM signal acquisition circuit is connected to the microprocessor; an input end of the voltage acquisition circuit is connected to the anode of the rectifier diode, and an output end of the voltage acquisition circuit is connected to the microprocessor; a first end of the seventh resistor is connected to the third power supply, and a second end of the seventh resistor is connected to the charging guidance interface; an input end of the analog sampling filter circuit is connected to the second end of the seventh resistor, and an output end of the analog sampling filter circuit is connected to the microprocessor; a first end of the eighth resistor is connected to the charging guidance interface, and a second end of the eighth resistor is connected to a collector of the triode, an emitter of the triode is grounded, and a base of the triode is connected to the microprocessor; a first end of the first coupling capacitor is grounded, and the first end of the first coupling capacitor is further connected to the charging guidance interface; a second end of the first coupling capacitor is connected to a first end of a primary coil of the communication transformer, and a first end of the second coupling capacitor is connected to the rectifier diode; a second end of the second coupling capacitor is connected to a second end of the primary coil of the communication transformer, a first secondary coil of the communication transformer is connected to the signal sending drive circuit, and a second secondary coil of the communication transformer is connected to the signal receiving filter circuit; the PLC chip is connected to the signal sending drive circuit, the signal receiving filter circuit, the PLC chip power supply and the microprocessor.

To achieve the above-mentioned purpose, the present application further proposes a circuit board including the vehicle-end charging control guidance circuit as described above.

To achieve the above-mentioned purpose, the present application further proposes a vehicle including the vehicle-end charging control guidance circuit as described above.

The technical solution of the present application proposes a vehicle-end charging control guidance circuit, the vehicle-end charging control guidance circuit includes a charging guidance module, the charging guidance module includes a switching unit, a differential charging guidance circuit and a common charging guidance circuit; the switching unit is configured to conduct the differential charging guidance circuit corresponding to a charging interface standard of a power supply device in the charging guidance module in response to receiving a switch control signal; and the charging guidance module is configured to transmit a charging signal between the power supply device and a microprocessor by a conducted differential charging guidance circuit and the common charging guidance circuit. Since the switching unit in this embodiment conducts the differential charging guidance circuit corresponding to the charging interface standard of the power supply device when receiving the switch control signal, the charging guidance module transmits the charging signal between the power supply device and the microprocessor by the differential charging guidance circuit and the common charging guidance circuit, and meets the requirements of different charging interface standards by the differential charging guidance circuit, thereby achieving compatibility with different charging interface standards.

### BRIEF DESCRIPTION OF THE DRAWINGS

In order to explain the embodiments of the present application or the technical solutions in the prior art more clearly, the accompanying drawings needed to be used in the description of the embodiments or the prior art will be briefly introduced below. Obviously, the accompanying drawings in the following description are only some embodiments of the present application, other accompanying drawings may be obtained based on the provided accompanying drawings without exerting creative efforts for those of ordinary skill in the art.
FIG. 1 is a functional module diagram of a vehicle-end charging control guidance circuit according to a first embodiment of the present application.
FIG. 2 is a functional module diagram of a vehicle-end charging control guidance circuit according to an embodiment of the present application.
FIG. 3 is a functional module diagram of a vehicle-end charging control guidance circuit of according to a second embodiment of the present application.
FIG. 4 is a circuit structure diagram of a vehicle-end charging control guidance circuit of according to a third embodiment of the present application.

### Explanation of reference numbers:

| numbe r | name | numbe r | name |
|---|---|---|---|
| 01 | charging guidance module | 10 | switching unit |
| 20 | differential charging guidance circuit | 30 | common charging guidance circuit |
| 201 | first charging connection confirmation circuit | 202 | fast charging connection confirmation circuit |
| 203 | first auxiliary power supply circuit | 204 | communication transceiver circuit |
| 205 | power line carrier communication circuit | 206 | second charging connection confirmation circuit |
| 207 | second auxiliary power supply circuit | 208 | charging permission circuit |
| 301 | voltage acquisition circuit | 302 | PWM signal acquisition circuit |
| CP/PL C | control pilot function signal | CC/PP | charging connection confirmation signal |
| CC2/C PD | fast charging connection confirmation signal | VCP | charging permission signal |
| S+/CO M1 | direct-current charging communication CANH | S-/COM2 | direct-current charging communication CANL |
| PE/PC | ground signal | L | communication transform |
| R1-R8 | first resistor to eighth resistor | VCC1-VCC3 | first power supply to third power supply |
| VCC | PLC chip power supply | K1 | first switch |
| K2 | gating switch | K3 | third switch |
| Q | triode | D | rectifier diode |
| 2051 | signal sending drive circuit | 2052 | signal receiving filter circuit |
| IC | PLC chip | C1 | first coupling capacitor |
| C2 | second coupling capacitor | 1 | analog sampling filter circuit |
| 101 | first switching subunit | 102 | second switching subunit |
| 2021 | analog acquisition filter circuit | | |

The realization of the purpose, functional features and advantages of the present application will be further described in conjunction with the embodiments and with reference to the accompanying drawings.

### DETAILED DESCRIPTION OF THE EMBODIMENTS

The technical solutions in the embodiments according to the present application will be clearly and completely described below in conjunction with the accompanying drawings in the embodiments according to the present application, and it is clear that the described embodiments are only a part of the embodiments according to the present application, and not all of the embodiments. Based on the embodiments in the present application, all other embodiments obtained by those of ordinary skill in the art without making creative labor fall within the scope of the present application.

It should be noted that, if there are directional instructions (such as up, down, left, right, front, back or the like) involved in the embodiments of the present application, the directional indications are only used to explain the relative positional relationship, movement and so on between various components in a specific posture (as shown in the accompanying drawings). If the specific posture changes, the directional indication will also change accordingly.

In addition, if there are descriptions involving "first", "second" or the like involved in the embodiments of the present application, the descriptions of "first", "second" or the like are only for descriptive purposes and cannot be understood as indicating or implying the relative importance or implicitly indicating the quantity of the technical features indicated. Therefore, features defined as "first" and "second" may explicitly or implicitly include at least one of these features. In addition, the technical solutions of various embodiments may be combined with each other, but it must be based on that those of ordinary skill in the art can achieve. When the combination of technical solutions is contradictory or cannot be achieved, it should be considered that such combination of technical solutions does not exist and is not within the protection scope claimed by the present application.

The present application proposes a vehicle-end charging control guidance circuit.

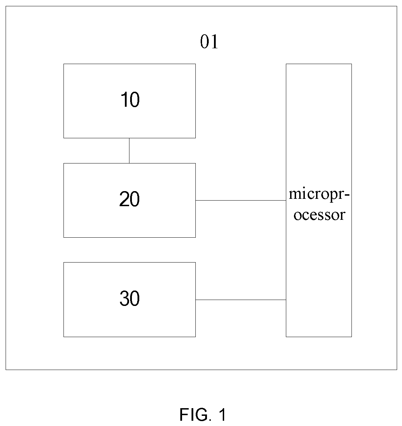

Referring to FIG. 1, in an embodiment of the present application, the vehicle-end charging control guidance circuit includes a charging guidance module 01, and the charging guidance module 01 includes a switching unit 10, a differential charging guidance circuit 20 and a common charging guidance circuit 30.

The switching unit 10 is configured to conduct the differential charging guidance circuit 20 corresponding to a charging interface standard of a power supply device in the charging guidance module 01 in response to receiving a switch control signal.

It can be understood that the differential charging guidance circuit may be a signal transmission circuit that is different between a certain charging interface standard and other charging interface standards; the common charging guidance circuit may be a signal transmission circuit that is the same between various charging interface standards; the switch control signal may be a signal that controls the differential charging guidance circuit to conduct, and the switch control signal corresponds to the charging interface standard, that is, different switch control signals conduct the differential charging guidance circuits corresponding to different charging interface standards.

In a specific implementation, for example, when the charging guidance circuit at the vehicle side needs to adapt to the charging interface standard A, the car personal computer (CAR PC) sends a switch control signal corresponding to A, and the switching unit 10 conducts the differential charging guidance circuit corresponding to A in the charging guidance module 01 when receiving the switch control signal.

The charging guidance module 01 is configured to transmit a charging signal between the power supply device and a microprocessor by a conducted differential charging guidance circuit 20 and the common charging guidance circuit 30.

It can be understood that the conducted differential charging guidance circuit and the common charging guidance circuit constitute a complete signal transmission circuit of the charging interface standard; the microprocessor may be a processor in a vehicle controller; the charging signal may be a signal transmitted before the power supply device and the microprocessor to indicate the charging state, for example, the charging signal includes a charging connection confirmation signal, a power line carrier signal, etc., and there are differences in the charging signals corresponding to different charging interface standards.

In a specific implementation, this embodiment, according to each charging guidance interface and charging guidance circuit of different charging interface standards, merges the charging guidance circuits with the same partial functions, the same control guidance circuit and the same parameters into a common charging guidance circuit; partially merges the charging guidance circuits with the same functions, the same charging guidance circuit but different guidance circuit parameters, and performs differentiated design on individual components to obtain a differential charging guidance circuit. The vehicle-end charging control guidance circuit proposed according to the above design includes a charging guidance module, the charging guidance module includes a switching unit, a differential charging guidance circuit and a common charging guidance circuit. Assuming that the charging interface standard that the vehicle-end charging guidance circuit needs to meet is A, a switch control signal corresponding to A may be triggered by the CAR PC, the switching unit conducts the differential charging guidance circuit corresponding to A according to the received switch control signal, and the charging guidance module transmits the charging signal corresponding to A between the power supply device and the microprocessor by the conducted differential charging guidance circuit and the common charging guidance circuit.

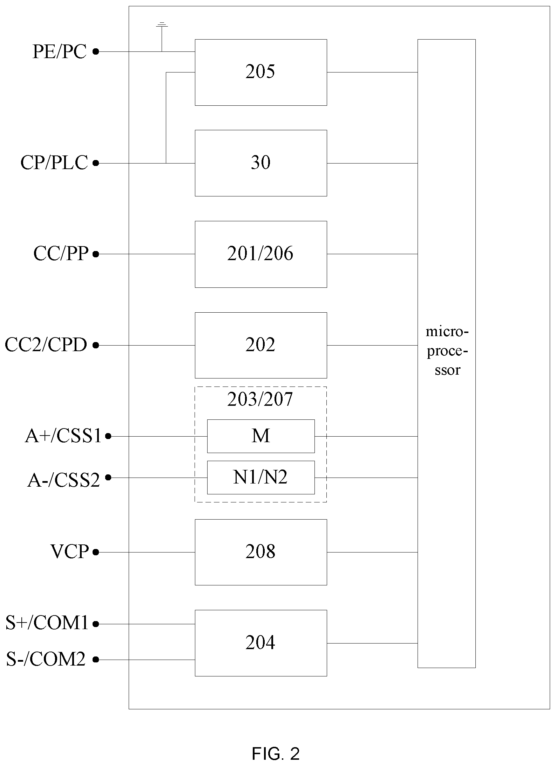

In an embodiment, referring to FIG. 2, in order to make the vehicle-end charging control guidance circuit adapt to different charging interface standards while reducing electrical complexity, the common charging guidance circuit 30 is configured to transmit a control pilot function signal between the power supply device and the microprocessor.

In this embodiment, the common charging guidance circuit 30 may be a control pilot (CP) guidance circuit; the charging guidance interface corresponding to the CP guidance circuit is a control pilot (CP) interface; the CP guidance circuit transmits the CP signal (that is, the control pilot function signal) between the power supply device and the microprocessor.

The differential charging guidance circuit 20 includes: a first charging connection confirmation circuit 201, a fast charging connection confirmation circuit 202, a first auxiliary power supply circuit 203 and a communication transceiver circuit 204.

In this embodiment, the differential charging guidance circuit may be a differential charging guidance circuit corresponding to the first charging interface standard, the differential charging guidance circuit and the above-mentioned common charging guidance circuit constitute a signal transmission circuit corresponding to the first charging interface standard, and the signal transmission circuit includes: a common charging guidance circuit, a first charging connection confirmation circuit, a fast charging connection confirmation circuit, a first auxiliary power supply circuit and a communication transceiver circuit.

Or, the differential charging guidance circuit includes: a first charging connection confirmation circuit 201 and a power line carrier communication circuit 205.

In this embodiment, the differential charging guidance circuit may be a differential charging guidance circuit corresponding to the second charging interface standard; the differential charging guidance circuit and the above-mentioned common charging guidance circuit constitute a signal transmission circuit corresponding to the second charging interface standard, and the signal transmission circuit includes: a common charging guidance circuit, a first charging connection confirmation circuit and a power line carrier communication circuit.

Or, the differential charging guidance circuit includes: a second charging connection confirmation circuit 206 and a power line carrier communication circuit 205.

In this embodiment, the differential charging guidance circuit may be a differential charging guidance circuit corresponding to the third charging interface standard; the differential charging guidance circuit and the above-mentioned common charging guidance circuit constitute a signal transmission circuit corresponding to the third charging interface standard, and the signal transmission circuit includes: a common charging guidance circuit, a second charging connection confirmation circuit, and a power line carrier communication circuit.

Or, the differential charging guidance circuit includes: a second charging connection confirmation circuit 206, a fast charging connection confirmation circuit 202, a second auxiliary power supply circuit 207, a charging permission circuit 208 and a communication transceiver circuit 204.

In this embodiment, the differential charging guidance circuit may be a differential charging guidance circuit corresponding to a fourth charging interface standard; the differential charging guidance circuit and the above-mentioned common charging guidance circuit constitute a signal transmission circuit corresponding to the fourth charging interface standard, and the signal transmission circuit includes: a common charging guidance circuit, a second charging connection confirmation circuit, a fast charging connection confirmation circuit, a second auxiliary power supply circuit, a charging permission circuit and a communication transceiver circuit.

The first charging connection confirmation circuit 201 is configured to transmit a first charging connection confirmation signal between the power supply device and the microprocessor.

The fast charging connection confirmation circuit 202 is configured to transmit a fast charging connection confirmation signal between the power supply device and the microprocessor.

The first auxiliary power supply circuit 203 is configured to provide a first auxiliary power supply for the microprocessor.

The charging permission circuit 208 is configured to send a charging permission signal to the power supply device so that the power supply device starts charging in response to receiving the charging permission signal.

The second charging connection confirmation circuit 206 is configured to transmit a second charging connection confirmation signal between the power supply device and the microprocessor.

The second auxiliary power supply circuit 207 is configured to provide a second auxiliary power supply for the microprocessor.

The communication transceiver circuit 204 is configured to transmit communication message between the power supply device and the microprocessor.

The power line carrier communication circuit 205 is configured to transmit a power line carrier signal between the power supply device and the microprocessor.

In this embodiment, assuming that the first charging interface standard is the Chinese standard, and the corresponding charging guidance circuit is: a common charging guidance circuit 30, a first charging connection confirmation circuit 201, a fast charging connection confirmation circuit 203, a first auxiliary power supply circuit 203 and a communication transceiver circuit 204; assuming that the second charging interface standard is the European standard, and the corresponding charging guidance circuit is: a common charging guidance circuit 30, a first charging connection confirmation circuit 201 and a power line carrier communication circuit 205; assuming that the third charging interface standard is the American standard, and the corresponding charging guidance circuit is: a common charging guidance circuit 30, a second charging connection confirmation circuit 206 and a power line carrier communication circuit 205; assuming that the fourth charging interface standard is the Japanese standard, and the corresponding charging guidance circuit is: a common charging guidance circuit 30, a second charging connection confirmation circuit 206, a fast charging connection confirmation circuit 203, a second auxiliary power supply circuit 207, a charging permission circuit 208 and a communication transceiver circuit 204. The charging guidance interface corresponding to the common charging guidance circuit 30 is control pilot/power line communication (CP/PLC), PLC specifically refers to the direct-current charging power line carrier communication signal in Europe and the United States. The charging guidance interface corresponding to the first charging connection confirmation circuit 201 and the second charging connection confirmation circuit 206 is connection confirm/proximity contact (CC/PP) interface. The charging guidance interface corresponding to the fast charging connection confirmation circuit 203 is connection confirm 2/connector proximity detection (CC2/CPD) interface. The first auxiliary power supply circuit 203 and the second auxiliary power supply circuit 207 include two parts: M and N1/N2, M is a circuit shared by the first auxiliary power supply circuit 203 and the second auxiliary power supply circuit 207, the corresponding charging guidance interface is A+/CSS1 interface, N1/N2 is the difference section between the first auxiliary power supply circuit 203 and the second auxiliary power supply circuit 207, and the corresponding charging guidance interface is A-/CSS2 interface, when the difference is N1, it forms the first auxiliary power supply circuit 203 with M, and when the difference is N2, it forms the second auxiliary power supply circuit 207 with M. A+ is the auxiliary power supply of the first auxiliary power supply circuit according to Chinese standards, CSS1 is the charging confirmation signal 1 of the second auxiliary power supply circuit according to Japanese standards, A- is the power supply ground of the first auxiliary power supply circuit according to Chinese standards, and CSS2 is the charging confirmation signal 2 of the second auxiliary power supply circuit according to Japanese standards. The charging guidance interface corresponding to the charging permission circuit 208 is a VCP interface. The communication transceiver circuit 204 corresponds to two charging guidance interfaces, namely S+/COM1 and S-/COM2. S+ and S- are CANH and CANL of DC charging communication according to the Chinese standard, and COM1 and COM2 are CANH and CANL of direct-current charging communication according to the Japanese standard. PE/PC is the grounding port according to the Chinese standard, the European standard, the American standard and the Japanese standard. That is, after integration and merging in this embodiment, there are a total of nine charging guidance interfaces and eight sets of charging guidance circuits.

The present embodiment provides a vehicle-end charging control guidance circuit, the vehicle-end charging control guidance circuit includes a charging guidance module, the charging guidance module includes a switching unit, a differential charging guidance circuit and a common charging guidance circuit; the switching unit is configured to conduct the differential charging guidance circuit corresponding to a charging interface standard of a power supply device in the charging guidance module in response to receiving a switch control signal; and the charging guidance module is configured to transmit a charging signal between the power supply device and a microprocessor by a conducted differential charging guidance circuit and the common charging guidance circuit. Since the switching unit in this embodiment conducts the differential charging guidance circuit corresponding to the charging interface standard of the power supply device when receiving the switch control signal, the charging guidance module transmits the charging signal between the power supply device and the microprocessor by the differential charging guidance circuit and the common charging guidance circuit, and meets the requirements of different charging interface standards by the differential charging guidance circuit, thereby achieving compatibility with different charging interface standards.

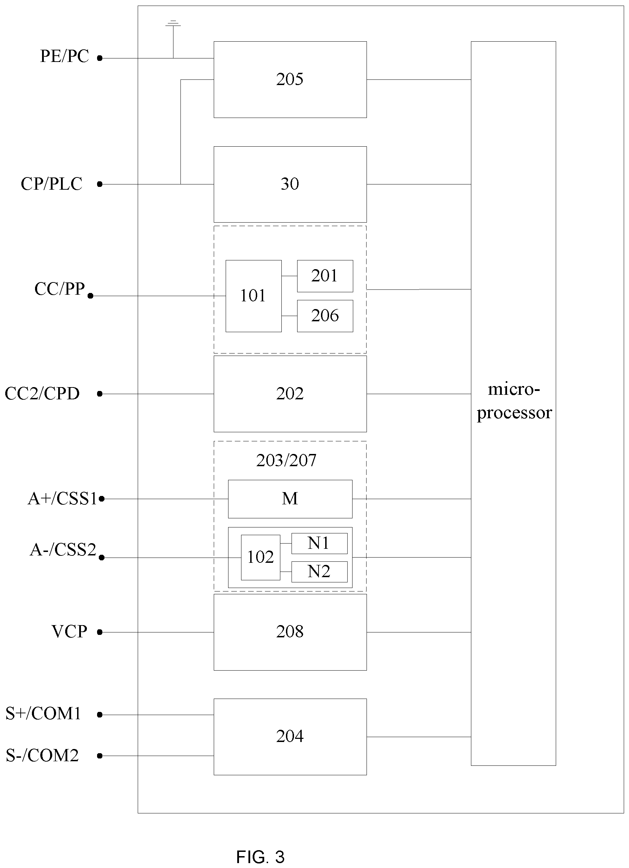

Referring to FIG. 3, on the basis of the first embodiment, a second embodiment of a vehicle-end charging control guidance circuit is proposed. In this embodiment, the switching unit 10 includes a first switching subunit 101 and a second switching subunit 102, and the first switching subunit 101 and the second switching subunit 102 are respectively connected to charging guidance interfaces.

The first switching subunit 101 is configured to conduct the differential charging guidance circuit 20 and the first charging connection confirmation circuit 201 in response to receiving a first switch control signal.

It can be understood that the first switching subunit 101 may be a unit corresponding to the CC/PP interface. When the first switching subunit receives the first switch control signal, the corresponding first charging connection confirmation circuit 201 is conducted to the CC/PP interface.

The second switching subunit 102 is configured to conduct the differential charging guidance circuit 20 and the first auxiliary power supply circuit 203 in response to receiving the first switch control signal.

It should be understood that the first switch control signal may be a switch control signal corresponding to the first charging interface standard; the second switching subunit 102 may be a unit corresponding to the A-/CSS2 interface. When the second switching subunit receives the first switch control signal, the power supply ground N1 of the corresponding second auxiliary power supply circuit is conducted with the A-/CSS2 interface, and N1 and M form the first auxiliary power supply circuit 203.

It can be understood that after the first charging connection confirmation circuit 201 and the first auxiliary power supply circuit 203 are conducted, the vehicle-end charging guidance control circuit is adapted to the first charging interface standard, and the vehicle may be charged by the power supply device corresponding to the first charging interface standard.

In an embodiment, in order to adapt the vehicle-end charging control guidance circuit to the second charging interface standard, the switching unit 10 includes a first switching subunit 101, and the first switching subunit is connected to a charging guidance interface.

The first switching subunit 101 is configured to conduct the differential charging guidance circuit and the first charging connection confirmation circuit 201 in response to receiving a second switch control signal.

It can be understood that the second switch control signal may be a switch control signal corresponding to the second charging interface standard; when the first switching subunit 101 receives the second switch control signal, the corresponding first charging connection confirmation circuit 201 and the CC/PP interface are conducted. That is, the charging connection confirmation circuit of the first charging interface standard is the same as the charging connection confirmation circuit of the second charging interface standard, both are the first charging connection confirmation circuit 201, and at this time, the second switching subunit 102 does not act.

It should be understood that after the first charging connection confirmation circuit 201 is conducted, at this time, the vehicle-end charging guidance control circuit is adapted to the second charging interface standard, and the vehicle can be charged by the power supply device corresponding to the second charging interface standard.

In an embodiment, in order to adapt the vehicle-end charging control guidance circuit to the third charging interface standard, the switching unit includes a first switching subunit 101, and the first switching subunit 101 is connected to a charging guidance interface.

The first switching subunit 101 is configured to conduct the differential charging guidance circuit and the second charging connection confirmation circuit 206 in response to receiving a third switch control signal.

It can be understood that the third switch control signal may be a switch control signal corresponding to the third charging interface standard. When the first switching subunit 101 receives the third switch control signal, the corresponding second charging connection confirmation circuit 206 is conducted to the CC/PP interface, that is, the charging connection confirmation circuits of the third charging interface standard, the charging connection confirmation circuits of the first charging interface standard and the charging connection confirmation circuits of the second charging interface standard are different, but the three charging interface standards share the CC/PP interface; the second switching subunit 102 does not act.

It should be understood that after the second charging connection confirmation circuit 206 is conducted, at this time, the vehicle-end charging guidance control circuit is adapted to the third charging interface standard, and the vehicle can be charged by the power supply device corresponding to the third charging interface standard.

In an embodiment, in order to make the vehicle-end charging control guidance circuit adapt to the fourth charging interface standard, the switching unit 10 includes a first switching subunit 101 and a second switching subunit 102, and the first switching subunit 101 and the second switching subunit 102 are respectively connected to charging guidance interfaces.

The first switching subunit 101 is configured to conduct the differential charging guidance circuit and the second charging connection confirmation circuit 206 in response to receiving a fourth switch control signal.

The second switching subunit 102 is configured to conduct the differential charging guidance circuit and the second auxiliary power supply circuit 207 in response to receiving the fourth switch control signal.

It should be understood that the fourth switch control signal may be a switch control signal corresponding to the fourth charging interface standard. When the first switching subunit 101 receives the fourth switch control signal, the second charging confirmation circuit 206 and the second auxiliary power supply circuit 207 are conducted, and at this time, N2 and M form the second auxiliary power supply circuit. That is, the fourth charging interface standard is different from the charging connection confirmation circuits corresponding to the first charging interface standard and the second charging interface standard, and is the same as the charging connection confirmation circuits corresponding to the third charging interface standard, but the first charging interface standard, the second charging interface standard, the third charging interface standard and the fourth charging interface standard share one charging guidance interface CC/PP interface. The second auxiliary power supply circuit 207 and the first auxiliary power supply circuit 203 share the charging guidance interface. The same part of the two auxiliary power supply circuits is M, and the difference part is N1/N2. The second switching subunit switches between the first auxiliary power supply circuit 203 and the second auxiliary power supply circuit 207 by switching N1/N2.

In this embodiment, the switching unit includes a first switching subunit and a second switching subunit, and the first switching subunit and the second switching subunit are respectively connected to charging guidance interfaces; the first switching subunit is configured to conduct the differential charging guidance circuit and the first charging connection confirmation circuit in response to receiving the first switch control signal; and the second switching subunit is configured to conduct the differential charging guidance circuit and the first auxiliary power supply circuit in response to receiving the first switch control signal. In this embodiment, since the first charging connection confirmation circuit and the first auxiliary power supply circuit are conducted when the first switching subunit and the second switching subunit receive the first switch control signal, the vehicle-end charging control guidance circuit meets the first charging interface standard.

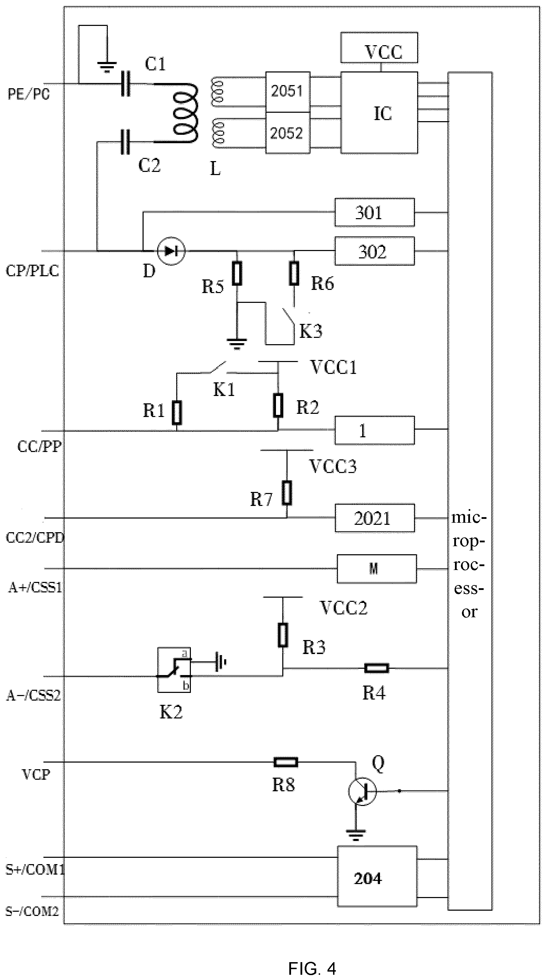

Referring to FIG. 4, on the basis of the above embodiment, a third embodiment of a vehicle-end charging control guidance circuit is proposed. In this embodiment, the first switching subunit 101 includes a first power supply VCC1, a first resistor R1, a second resistor R2 and a first switch K1.

A first end of the first resistor R1 is connected to the first power supply VCC1, and a second end of the first resistor R1 is connected to the charging guidance interface; the first switch K1 is provided between a first end of the second resistor R2 and a first end of the first resistor R1, and the second end of the second resistor R2 is connected to the second end of the first resistor R1.

It can be understood that the first switch K1 may be opened or closed according to the switch control signal. When the first switch K1 is opened, the first resistor R1 is opened, the second resistor R2 is connected to the circuit, and the first power supply VCC1, the first resistor R1 and the analog sampling filter circuit 1 form a first charging connection confirmation circuit 201 that meets the first charging interface standard and the second charging interface standard. When the first switch K1 is closed, the first resistor R1 is connected to the circuit and connected in parallel with the second resistor R2, the first power supply VCC1, the first resistor R1, the second resistor R2 and the analog sampling filter circuit 1 form a second charging connection confirmation circuit 206 that meets the third charging interface standard and the fourth charging interface standard. The first switch K1 may be a metal-oxide-semiconductor field-effect transistor (MOS) tube, and the analog sampling filter circuit is an existing circuit, which will not be described in detail in this embodiment.

In an embodiment, in order to make the vehicle-end charging control guidance circuit compatible with different charging interface standards while reducing electrical complexity, the second switching subunit 102 includes a second power supply VCC2, a third resistor R3, a fourth resistor R4 and a gating switch chip K2.

A first end of the third resistor R3 is connected to the second power supply VCC2, a second end of the third resistor R3 is connected to a first end of the fourth resistor R4, a second end of the fourth resistor R4 is connected to the microprocessor, a first end of the gating switch chip K2 is connected to the charging guidance interface, a second end of the gating switch chip K2 is grounded, and a third end of the gating switch chip K2 is connected to the second end of the third resistor R3.

It can be understood that when the gating switch K2 is connected to the a end, the corresponding charging guidance interface A-/CSS2 is grounded, and together with the auxiliary power supply M constitutes a first auxiliary power supply circuit 203 that meets the first charging interface standard. When the gating switch is connected to the b end, the third resistor R3, the fourth resistor R4 and the second power supply VCC2 and the auxiliary power supply M together constitute a second auxiliary power supply circuit 207 that meets the fourth charging interface standard.

In an embodiment, in order to make the vehicle-end charging control guidance circuit compatible with different charging interface standards, the common charging guidance circuit 30 includes: a rectifier diode D, a fifth resistor R5, a sixth resistor R6, a third switch K3, a voltage acquisition circuit 301 and a pulse width modulation (PWM) signal acquisition circuit 302; the fast charging connection confirmation circuit 202 includes: a third power supply VCC3, a seventh resistor R7 and an analog sampling filter circuit 2021; the charging permission circuit 208 includes an eighth resistor R8 and a triode Q; the power line carrier communication circuit 205 includes a first coupling capacitor C1, a second coupling capacitor C2, a communication transformer L, a signal sending drive circuit 2051, a signal receiving filter circuit 2052, a power line communication (PLC) chip power supply VCC and a PLC chip IC.

An anode of the rectifier diode D is connected to a charging guidance interface, a cathode of the rectifier diode D is connected to a first end of the fifth resistor R5, and a second end of the fifth resistor R5 is grounded; a first end of the third switch K3 is connected to the second end of the fifth resistor R5, a second end of the third switch K3 is connected to a first end of the sixth resistor R6, a second end of the sixth resistor R6 is connected to an input end of the PWM signal acquisition circuit 302, an output end of the PWM signal acquisition circuit 302 is connected to the microprocessor; an input end of the voltage acquisition circuit 301 is connected to the anode of the rectifier diode D, and an output end of the voltage acquisition circuit 301 is connected to the microprocessor; a first end of the seventh resistor R7 is connected to the third power supply VCC1, a second end of the seventh resistor R7 is connected to the charging guidance interface, an input end of the analog sampling filter circuit 2021 is connected to the second end of the seventh resistor R7, and an output end of the analog sampling filter circuit 2021 is connected to the microprocessor; a first end of the eighth resistor R8 is connected to the charging guidance interface, a second end of the eighth resistor R8 is connected to a collector of the triode Q, an emitter of the triode Q is grounded, and a base of the triode Q is connected to the microprocessor; a first end of the first coupling capacitor C1 is grounded, the first end of the first coupling capacitor C1 is further connected to the charging guidance interface, a second end of the first coupling capacitor C1 is connected to a first end of a primary coil of the communication transformer, and a first end of the second coupling capacitor C2 is connected to the rectifier diode D; a second end of the second coupling capacitor C2 is connected to a second end of the primary coil of the communication transformer L, a first secondary coil of the communication transformer L is connected to the signal sending drive circuit 2051, and a second secondary coil of the communication transformer L is connected to the signal receiving filter circuit 2052; the PLC chip IC is connected to the signal sending drive circuit 2051, the signal receiving filter circuit 2052, the PLC chip power supply VCC and the microprocessor.

In this embodiment, for example, the first charging interface standard is a Chinese standard referred to as the national standard, the second charging interface standard is an European standard referred to as the European standard, the third charging interface standard is an American standard referred to as the American standard, and the fourth charging interface standard is a Japanese standard referred to as the Japanese standard. D, R5, R6, K3, 301 and 302 constitute a common charging guidance circuit 30 for the national standard, the European standard, the American standard and the Japanese standard. 302 is a control pilot (CP) signal PWM signal acquisition circuit of the control pilot (CP) guidance circuit. D, R5, R6, K3 and 302 constitute the guidance circuits of the above four standards. 301 is a CP electrical level voltage acquisition circuit unique to the American standard CP guidance circuit, and the introduction of this circuit is not exclusive and does not affect the functions of the guidance circuits of the other three standards.

VCC1, R1, R2 and 1 form a charging connection confirmation circuit of the national standard CC and the European standard, American standard and Japanese standard PP. VCC1 is a universal pull-up 5V power supply, and 1 is an analog sampling filter circuit universal to various standards. When K1 is closed, the resistance of the pull-up resistor when R1 and R2 are connected in parallel is 330 ohms, and at this time, the charging confirmation circuit is the second charging confirmation circuit 206, which meets the American standard and the Japanese standard. When K1 is opened, R2 is a 1K pull-up resistor supporting the Chinese standard and European standard, and at this time, the charging confirmation circuit is the first charging confirmation circuit 201. K1 may be a P-Metal-Oxide-Semiconductor Field-Effect Transistor (PMOS) tube that supports R1 connection and disconnection, and by controlling the conduction of the PMOS tube and disconnecting the PMOS tube, performing switching between the first charging confirmation circuit 201 and the second charging confirmation circuit 206, thereby realizing detection and recognition of the charging confirmation signals of the national standard CC and the European standard, American standard and Japanese standard PP.

VCC3, R7 and 2021 constitute the fast charging connection confirmation circuit 202 of the national standard and Japanese standard. VCC3, R7 and 2021 are the common fast charging connection circuits of the Chinese standard and Japanese standard. VCC3 is the pull-up power supply, R7 is a 1k pull-up resistor, and 2021 is an analog acquisition filter circuit. There is no fast charging connection confirmation circuit in the European standard and American standards. The label M is the same part in the auxiliary power supply circuits of the national standard and Japanese standard. VCC2, R3, K2 and R4 constitute the power supply ground of the national standard and Japanese standard, K2 is the gating switch, the default position of the switch is point a, that is, the default function is the national standard A-, at this time N1 and M constitute the first auxiliary power supply circuit 203. When the switch is gated to point b, it becomes to support the Japanese standard CSS2 function, N2 and M constitute the second auxiliary power supply circuit 207, and the European standard and American standard do not have this interface; R8 and Q constitute the charging permission circuit 206 of the Japanese standard, and there is no charging permission circuit in the Chinese standard, European standard and American standard. 204 is the controller area network (CAN) communication transceiver circuit of direct-current charging of the Chinese standard and the Japanese standard, corresponding to two charging guidance interfaces S+/COM1 and S-/COM2, S+ and S- are the direct-current charging communication CANH (CAN high, Controller Area Network high) and direct-current charging communication CANL (CAN low, Controller Area Network low) of the Chinese standard, COM1 and COM2 are the direct-current charging communication CANH and direct-current charging communication CANL of the Japanese standard, the Chinese standard and the Japanese standard share the same CAN transceiver circuit, the European standard and the American standard have no communication transceiver circuit. C1, C2, L, 2051, 2052, VCC and IC constitute the power line carrier communication circuit 205 of the European standard and the American standard. Since the carrier signal line of the power line carrier communication is actually the CP signal line, the PLC and CP are the same signal line and share one charging guidance interface CP/PLC interface. There is no power line carrier communication circuit in the Chinese standard and the Japanese standard. The microprocessor receives, processes, sends and controls the signals transmitted by the above-mentioned eight charging guidance interface circuits. The microprocessor is the processor inside the microprocessor controller, the controller is an electronic controller that integrates four standard charging guidance circuits of the Chinese standard, European standard, American standard and Japanese standard inside the vehicle, including vehicle control unit (VCU)/battery management system (BMS)/Domain Controller, etc. CP/PLC, CC/PP, CC2/CPD, A+/CSS1, A-/CSS2, VCP, S+/COM1, S-/COM2 and PE/PC are nine groups of charging guidance interfaces that combine the four charging interface of Chinese standard, European standard, American standard and Japanese standard. Based on the analysis and merging of charging guidance circuits that are compatible with each other among the standards, the corresponding guidance signal interfaces are merged to reduce the electrical interfaces of the controller. This embodiment realizes the identical circuit design when being compatible with the requirements of the charging standards of China, Europe, America and Japan, and the requirements of different charging interface standards may be met by controlling the states of switches K2 and K3.

In this embodiment, the first switching subunit includes the first power supply, the first resistor, the second resistor and the first switch; and the first end of the first resistor is connected to the first power supply, the second end of the first resistor is connected to the charging guidance interface, the first switch is provided between the first end of the second resistor and the first end of the first resistor, and the second end of the second resistor is connected to the second end of the first resistor. By controlling the closing and opening of the first switch, switching between the first charging confirmation circuit and the second charging confirmation circuit can be achieved, which can reduce electrical complexity and be compatible with different charging interface standards.

To achieve the above purpose, the present application further proposes a circuit board, the circuit board includes the vehicle-end charging control guidance circuit as described above, and there is no need to produce circuit boards of different specifications according to different charging interface standards, thereby improving the convenience of production, warehousing and transportation.

To achieve the above purpose, the present application further proposes a vehicle, the vehicle includes the circuit as described above. The specific structure of the circuit refers to the above-mentioned embodiments. Since the vehicle adopts all the technical solutions of all the above-mentioned embodiments, it has at least all the beneficial effects brought by the technical solutions of the above-mentioned embodiments, which will not be repeated here.

The above are only some embodiments of the present application, and are not intended to limit the scope of the present application. Under the concept of the present application, any equivalent structure transformation made by using the description and accompanying drawings of the present application, or directly or indirectly applied in other related technical fields, is included within the scope of the present application.

## Claims

1. A vehicle-end charging control guidance circuit, **characterized by** comprising:
a charging guidance module, wherein the charging guidance module comprises a switching unit, a differential charging guidance circuit and a common charging guidance circuit;
the switching unit is configured to conduct the differential charging guidance circuit corresponding to a charging interface standard of a power supply device in the charging guidance module in response to receiving a switch control signal; and
the charging guidance module is configured to transmit a charging signal between the power supply device and a microprocessor by a conducted differential charging guidance circuit and the common charging guidance circuit.

2. The vehicle-end charging control guidance circuit according to claim 1, wherein the common charging guidance circuit is configured to transmit a control pilot function signal between the power supply device and the microprocessor;
the differential charging guidance circuit comprises: a first charging connection confirmation circuit, a fast charging connection confirmation circuit, a first auxiliary power supply circuit and a communication transceiver circuit; or
the differential charging guidance circuit comprises: a first charging connection confirmation circuit and a power line carrier communication circuit; or
the differential charging guidance circuit comprises: a second charging connection confirmation circuit and a power line carrier communication circuit; or
the differential charging guidance circuit comprises: a second charging connection confirmation circuit, a fast charging connection confirmation circuit, a second auxiliary power supply circuit, a charging permission circuit and a communication transceiver circuit;
the first charging connection confirmation circuit is configured to transmit a first charging connection confirmation signal between the power supply device and the microprocessor;
the fast charging connection confirmation circuit is configured to transmit a fast charging connection confirmation signal between the power supply device and the microprocessor;
the first auxiliary power supply circuit is configured to provide a first auxiliary power supply for the microprocessor;
the charging permission circuit is configured to send a charging permission signal to the power supply device so that the power supply device starts charging in response to receiving the charging permission signal;
the second charging connection confirmation circuit is configured to transmit a second charging connection confirmation signal between the power supply device and the microprocessor;
the second auxiliary power supply circuit is configured to provide a second auxiliary power supply for the microprocessor;
the communication transceiver circuit is configured to transmit communication message between the power supply device and the microprocessor; and
the power line carrier communication circuit is configured to transmit a power line carrier signal between the power supply device and the microprocessor.

3. The vehicle-end charging control guidance circuit according to claim 2, wherein the switching unit comprises a first switching subunit and a second switching subunit, and the first switching subunit and the second switching subunit are respectively connected to charging guidance interfaces;
the first switching subunit is configured to conduct the differential charging guidance circuit and the first charging connection confirmation circuit in response to receiving a first switch control signal; and
the second switching subunit is configured to conduct the differential charging guidance circuit and the first auxiliary power supply circuit in response to receiving the first switch control signal.

4. The vehicle-end charging control guidance circuit according to claim 2, wherein the switching unit comprises a first switching subunit, and the first switching subunit is connected to a charging guidance interface; and
the first switching subunit is configured to conduct the differential charging guidance circuit and the first charging connection confirmation circuit in response to receiving a second switch control signal.

5. The vehicle-end charging control guidance circuit according to claim 2, wherein the switching unit comprises a first switching subunit, and the first switching subunit is connected to a charging guidance interface; and
the first switching subunit is configured to conduct the differential charging guidance circuit and the second charging connection confirmation circuit in response to receiving a third switch control signal.

6. The vehicle-end charging control guidance circuit according to claim 2, wherein the switching unit comprises a first switching subunit and a second switching subunit, and the first switching subunit and the second switching subunit are respectively connected to charging guidance interfaces;
the first switching subunit is configured to conduct the differential charging guidance circuit and the second charging connection confirmation circuit in response to receiving a fourth switch control signal; and
the second switching subunit is configured to conduct the differential charging guidance circuit and the second auxiliary power supply circuit in response to receiving the fourth switch control signal.

7. The vehicle-end charging control guidance circuit according to any one of claims 3 to 6, wherein the first switching subunit comprises a first power supply, a first resistor, a second resistor and a first switch; and
a first end of the first resistor is connected to the first power supply, and a second end of the first resistor is connected to the charging guidance interface; the first switch is provided between a first end of the second resistor and a first end of the first resistor, and the second end of the second resistor is connected to the second end of the first resistor.

8. The vehicle-end charging control guidance circuit according to claim 3 or 6, wherein the second switching subunit comprises a second power supply, a third resistor, a fourth resistor and a gating switch chip; and
a first end of the third resistor is connected to the second power supply, and a second end of the third resistor is connected to a first end of the fourth resistor; a second end of the fourth resistor is connected to the microprocessor, and a first end of the gating switch chip is connected to the charging guidance interface; a second end of the gating switch chip is grounded, and a third end of the gating switch chip is connected to the second end of the third resistor.

9. The vehicle-end charging control guidance circuit according to any one of claims 2-6, wherein the common charging guidance circuit comprises: a rectifier diode, a fifth resistor, a sixth resistor, a third switch, a voltage acquisition circuit and a pulse width modulation, PWM signal acquisition circuit; the fast charging connection confirmation circuit comprises: a third power supply, a seventh resistor and an analog sampling filter circuit; the charging permission circuit comprises an eighth resistor and a triode; the power line carrier communication circuit comprises a first coupling capacitor, a second coupling capacitor, a communication transformer, a signal sending drive circuit, a signal receiving filter circuit, a power line communication, PLC chip power supply and a PLC chip; and
an anode of the rectifier diode is connected to a charging guidance interface, and a cathode of the rectifier diode is connected to a first end of the fifth resistor; a second end of the fifth resistor is grounded; a first end of the third switch is connected to the second end of the fifth resistor, and a second end of the third switch is connected to a first end of the sixth resistor; a second end of the sixth resistor is connected to an input end of the PWM signal acquisition circuit, and an output end of the PWM signal acquisition circuit is connected to the microprocessor; an input end of the voltage acquisition circuit is connected to the anode of the rectifier diode, and an output end of the voltage acquisition circuit is connected to the microprocessor; a first end of the seventh resistor is connected to the third power supply, and a second end of the seventh resistor is connected to the charging guidance interface; an input end of the analog sampling filter circuit is connected to the second end of the seventh resistor, and an output end of the analog sampling filter circuit is connected to the microprocessor; a first end of the eighth resistor is connected to the charging guidance interface, and a second end of the eighth resistor is connected to a collector of the triode; an emitter of the triode is grounded, and a base of the triode is connected to the microprocessor; a first end of the first coupling capacitor is grounded, and the first end of the first coupling capacitor is further connected to the charging guidance interface; a second end of the first coupling capacitor is connected to a first end of a primary coil of the communication transformer, and a first end of the second coupling capacitor is connected to the rectifier diode; a second end of the second coupling capacitor is connected to a second end of the primary coil of the communication transformer; a first secondary coil of the communication transformer is connected to the signal sending drive circuit, and a second secondary coil of the communication transformer is connected to the signal receiving filter circuit; the PLC chip is connected to the signal sending drive circuit, the signal receiving filter circuit, the PLC chip power supply and the microprocessor.

10. A circuit board, **characterized by** comprising the vehicle-end charging control guidance circuit according to any one of claims 1 to 9.

11. A vehicle, **characterized by** comprising the vehicle-end charging control guidance circuit according to any one of claims 1 to 9.
